# EUROPÄISCHE PATENTANMELDUNG

(11) **EP 3 819 054 A1**
(43) Veröffentlichungstag der Anmeldung: **12.05.2021**
(21) Anmeldenummer: 20203307.2
(22) Anmeldetag: 22.10.2020
(51) Int. Cl.: B23C 5/00, B23C 5/04, B23C 5/22

(54) **TRÄGERBAUGRUPPE, INSBESONDERE WERKZEUGTRÄGERBAUGRUPPE UND VERFAHREN ZU DEREN ZUSAMMENBAU**

(30) Priorität: 05.11.2019 DE 102019129765; 30.04.2020 DE 102020111783
(71) Anmelder: Deutsche Institute für Textil- und Faserforschung Denkendorf, 73770 Denkendorf (DE)
(72) Erfinder: Sirtautas, Dr. Justas, 70567 Stuttgart (DE); Finckh, Hermann, 72649 Wolfschlugen (DE)
(74) Vertreter: Rüger Abel Patentanwälte PartGmbB

(57) **Zusammenfassung**

Die Erfindung betrifft eine Trägerbaugruppe (10) sowie ein Verfahren zu deren Zusammenbau. Die Trägerbaugruppe (10) ist dazu eingerichtet, wenigstens ein Bauteil (11) zu tragen, das mittels der Trägerbaugruppe (10) drehbar um eine Drehachse (D) angeordnet ist. Das Bauteil (11) kann, z.B. eine Schneidplatte (12) eines Werkzeugs sein, so dass die Trägerbaugruppe (10) eine Werkzeugträgerbaugruppe (13) darstellt. Die Trägerbaugruppe (10) ist in Leichtbauweise aufgebaut und weist mehrere in einer Axialrichtung (A) nebeneinander angeordnete Innenhohlkörper (16) auf, die von wenigstens einem Außenhohlkörper (25) in Umfangsrichtung (U) umschlossen werden. Die Innenhohlkörper (16) sind bevorzugt polygonähnlich mit Stegabschnitten (17) und gekrümmten Stützabschnitten (18) ausgebildet. Sie stützen sich mit ihren Stützabschnitten radial innen am Außenhohlkörper (25) ab. Am Außenhohlkörper (25) ist wenigstens eine Aufnahme (28) zum Anbringen des wenigstens einen Bauteils (11) vorhanden.

## Beschreibung

Die Erfindung betrifft eine Trägerbaugruppe, die zum Anordnen wenigstens eines Bauteils und zum drehenden Antreiben um eine Drehachse eingerichtet ist. Die Trägerbaugruppe kann beispielsweise wenigstens ein Schneidwerkzeug als Bauteil tragen und somit als Werkzeugträgerbaugruppe ausgebildet sein. Die Trägerbaugruppe eignet sich aber auch für andere Anwendungen, bei denen wenigstens ein Bauteil insbesondere bei hohen Drehzahlen drehbar um eine Drehachse gelagert werden muss, beispielsweise bei Kupplungen oder Bremsen. In diesen Fällen kann das Bauteil ein Kupplungskörper bzw. ein Bremsbelagkörper sein.

Werkzeugträger werden beispielsweise bei Rotationswerkzeugen mit daran angeordneten Schneidplatten verwendet. Ein solcher Werkzeugträger ist zum Beispiel aus DE 10 2018 101 407 A1 bekannt. Der Werkzeuggrundkörper kann dabei aus einem Metall oder einer metallischen Legierung bestehen. Die Schneidkörper können aus polykristallinem Diamant hergestellt sein.

Solche Werkzeugträger haben eine sehr hohe Masse und niedrige Eigenfrequenzen. Aufgrund der Masse kann die Drehzahl beim Antreiben um die Drehachse nicht beliebig erhöht werden. Die hohe Masse führt auch zu einem entsprechend hohen Energieverbrauch, beispielsweise beim Positionieren des Werkzeugs mit Maschinenachsen in einer Werkzeugmaschine und beim Ändern der Drehzahl.

Anstelle von Stahl oder Stahllegierungen könnten Leichtmetalle eingesetzt werden, wie etwa Aluminium. Allerdings ist ein Werkzeugträger aus Aluminium wegen der mangelnden Festigkeit allenfalls für bestimmte Aufgaben geeignet.

Ausgehend vom Stand der Technik ist es eine Aufgabe der vorliegenden Erfindung, eine Trägerbaugruppe zu schaffen, die einen Aufbau mit geringem Gewicht und hoher Stabilität gewährleistet.

Diese Aufgabe wird durch eine Trägerbaugruppe mit den Merkmalen des Patentanspruches 1 gelöst. Der Patentanspruch 16 betrifft ein Verfahren zum Zusammenbau einer Trägerbaugruppe vor.

Die erfindungsgemäße Trägerbaugruppe dient dazu, wenigstens ein Bauteil drehbar um eine Drehachse zu lagern bzw. abzustützen. Bei dem wenigstens einen Bauteil handelt es sich vorzugsweise um ein Werkzeug, insbesondere ein Schneidwerkzeug, so dass die Trägerbaugruppe eine Werkzeugträgerbaugruppe bildet. Mittels der Werkzeugträgerbaugruppe kann beispielsweise ein Fräser, ein Hobel, ein Bohrkopf oder ein anderes Werkzeug durch Anordnen wenigstens eines Schneidwerkzeugs als Bauteil an der Werkzeugträgerbaugruppe gebildet werden.

Die Trägerbaugruppe kann aber auch zum Tragen eines anderen Bauteils dienen, das bei hohen Drehzahlen um eine Drehachse drehbar gelagert werden soll, beispielsweise ein Kupplungsbelag oder Bremsbelag eingerichtet sein. Generell kann die Trägerbaugruppe in verschiedenen technischen Gebieten eingesetzt werden.

Die Trägerbaugruppe hat wenigstens einen Außenhohlkörper, der eine Drehachse umschließt, und mehrere Innenhohlkörper.

Die Innenhohlkörper umschließen jeweils die Drehachse und sind in einer Axialrichtung parallel zur Drehachse nebeneinander angeordnet. Vorzugsweise schließen sich die Innenhohlkörper in Axialrichtung unmittelbar aneinander an. Sie können in Axialrichtung auch mit einem Abstand zueinander angeordnet sein. Jeder Innenhohlkörper hat mehrere Stegabschnitte und mehrere gekrümmte Stützabschnitte. Jeweils zwei der Stegabschnitte gehen in einem gekrümmten Stützabschnitt ineinander über bzw. sind dort miteinander verbunden.

Die Stegabschnitte können sich geradlinig erstrecken. Zwei unmittelbar benachbarte Stegabschnitte sind in diesem Fall unter Bildung eines Eckwinkels ausgerichtet. Die Stegabschnitte können alternativ dazu gekrümmt sein, insbesondere konkav nach radial innen gekrümmt, wobei sich diese wenigstens eine Krümmungsachse radial außerhalb des betreffenden Innenhohlkörpers parallel zur Drehachse erstreckt.

Bevorzugt sind sämtliche Stegabschnitte eines Innenhohlkörpers gleich lang.

Jeder Innenhohlkörper kann eine polygonartige Gestalt aufweisen, wobei sich die Stegabschnitte entlang der Kanten dieses Polygons bis in den Stützabschnitt erstrecken. Bevorzugt sind die Stegabschnitte entlang von Kanten eines regelmäßigen Polygons angeordnet.

Jeder Innenhohlkörper hat mindestens zwei Stegabschnitte und zwei Stützabschnitte. Bei einer Ausführungsform weisen die Innenhohlkörper jeweils drei Stegabschnitte und drei gekrümmte Stützabschnitte auf. Zwei unmittelbar benachbarte Stegabschnitte, die in einem Stützabschnitt miteinander verbunden sind, schließen einen Eckwinkel von 60° ein.

Die Innenhohlkörper können auch unterschiedlich viele Stegabschnitte und Stützanschnitte aufweisen.

Der wenigstens eine Außenhohlkörper liegt radial außen an zumindest einem, an mehreren oder an allen Innenhohlkörpern an, beispielsgemäß an den Stützabschnitten der Innenhohlkörper. Jeder Innenhohlkörper kann im Bereich seiner geraden oder gekrümmten Stegabschnitte mit Abstand zum wenigstens einen Außenhohlkörper angeordnet sein.

Der wenigstens eine Außenhohlkörper kann in Axialrichtung eine Länge aufweisen, die zumindest der Gesamtlänge sämtlicher in Axialrichtung und nebeneinander angeordneter Innenhohlkörper entspricht.

An dem wenigstens einen Außenhohlkörper ist wenigstens eine Aufnahme vorhanden, die zum Anbringen des wenigstens einen Bauteils eingerichtet ist. Sind mehrere separate Außenhohlkörper vorhanden, sind diese in einer Axialrichtung parallel zur Drehachse nebeneinander angeordnet.

Durch diesen modularen Aufbau kann eine sehr leichte Trägerbaugruppe gebildet werden. Die radial zur Drehachse wirkenden Kräfte, insbesondere Fliehkräfte werden durch die polygonähnlichen Innenhohlkörper abgestützt. Die Torsionsmomente um die Drehachse und/oder Biegemomente um rechtwinklig zur Drehachse durch die Trägerbaugruppe verlaufende Biegeachsen, können vom wenigstens einen Außenhohlkörper aufgenommen und abgestützt werden.

Es ist somit eine Trägerbaugruppe mit einem um die Drehachse herum angeordneten Innenhohlraum oder Innenfreiraum gebildet, der sich radial innen innerhalb des wenigstens einen Außenhohlkörpers befindet. Die Masse der Trägerbaugruppe ist gering und ermöglicht daher auch hohe Drehzahlen und gestattet eine hohe Dynamik bei Drehzahländerungen und/oder Positionierbewegungen der Trägerbaugruppe. Die Trägerbaugruppe hat eine höhere Eigenfrequenz gegenüber bekannten Trägerbaugruppen gleicher axialer und radialer Dimension. Der Energieverbrauch beim Positionieren und bei Drehzahländerungen ist gering. Durch den Innenfreiraum können Späne abgeführt und/oder Kühlschmiermittel ab- bzw. zugeführt werden.

Die modulare Konstruktion der Trägerbaugruppe ermöglicht auch das individuelle Austauschen beschädigter oder verschlissener Komponenten. Der modulare Aufbau ermöglicht auch die Skalierung unter Verwendung derselben Einzelteile, beispielsweise um die Dimension der Trägerbaugruppe in Axialrichtung zu variieren.

Bei einer bevorzugten Ausführungsform ist jeder Hohlkörper und/oder der wenigstens eine Außenhohlkörper integral ausgebildet. Dadurch wird die Herstellung vereinfacht und die Stabilität verbessert.

Es ist vorteilhaft, wenn jeder der Innenhohlkörper aus einem faserverstärkten Verbundmaterial besteht. Zusätzlich oder alternativ kann der wenigstens eine Außenhohlkörper aus einem faserverstärkten Verbundmaterial bestehen.

Als Verstärkungsfasern können zum Beispiel Glasfasern und/oder Karbonfasern und/oder Aramidfasern und/oder Keramikfasern verwendet werden, die in eine Kunststoffmatrix eingebettet werden. Glasfasern können beispielsweise aus E-Glas und/oder ECR-Glas und/oder AR-Glas sein.

Das Kunststoffmaterial, in das die Verstärkungsfasern eingebettet sind, kann beispielsweise Epoxidharz, Vinylester, Polyurethan, Polyethylen, Polystyrol, Akrylat, Keramik oder eine siliziumorganische Verbindung (Polysiloxan) sein.

Dadurch, dass die Verstärkungsfasern in den Stegabschnitten gerade und gestreckt verlaufen, können die Innenhohlkörper Fliehkräfte sehr gut abstützen, weil sie dabei auf Zug beansprucht werden.

Im faserverstärkten Verbundmaterial des wenigstens einen Außenhohlkörpers können die Verstärkungsfasern in unterschiedlichen Richtungen angeordnet, vorzugsweise gekreuzt angeordnet werden. Die Ausrichtung der gekreuzten Verstärkungsfasern kann abhängig von der Anwendung variieren und eine oder mehrere der folgenden Verstärkungsfasergruppen aufweisen:
- eine Verstärkungsfasergruppe, bei der sich die Verstärkungsfasern unter einem Winkel von +45° gegenüber der Erstreckungsrichtung des wenigstens einen Außenhohlkörpers um die Drehachse erstrecken;
- eine Verstärkungsfasergruppe, bei der sich die Verstärkungsfasern unter einem Winkel von -45° gegenüber der Erstreckungsrichtung des wenigstens einen Außenhohlkörpers um die Drehachse erstrecken;
- eine Verstärkungsfasergruppe, bei der sich die Verstärkungsfasern entlang der Erstreckungsrichtung des wenigstens einen Außenhohlkörpers um die Drehachse erstrecken (Winkel = 0°)

Die Anzahl und die Ausrichtung der Verstärkungsfasergruppen kann variieren. Bei einer solchen Anordnung können eingeleitete Momente um die Drehachse bzw. Biegemomente um eine Biegeachse, die rechtwinklig zur Drehachse ausgerichtet ist, von dem wenigstens einen Außenhohlkörper aufgenommen werden.

Die Verstärkungsfasern können als Halbzeug in Form von zum Beispiel einem Gelege und/oder Gewebe in die Matrix des wenigstens einen Außenhohlkörpers eingebettet werden. Es ist auch vorteilhaft, wenn der wenigstens eine Außenhohlkörper in einem direkten Herstellungsverfahren hergestellt wird, zum Beispiel durch ein Flecht- oder Wickelverfahren mit Rovings.

Es ist außerdem vorteilhaft, wenn alle Innenhohlkörper dieselbe Anzahl an Stegabschnitten und gekrümmten Stützabschnitten aufweisen, z.B. jeweils drei. Es ist ferner vorteilhaft, wenn sämtliche Innenhohlkörper identisch ausgebildet sind. Dadurch wird der an die Anwendung angepasste modulare Aufbau vereinfacht, insbesondere im Hinblick auf die Dimension in Axialrichtung der Trägerbaugruppe.

Bei einer bevorzugten Ausführungsform sind die vorhandenen Innenhohlkörper unterschiedlichen Gruppen zugeordnet. Beispielsweise ist eine erste Gruppe von Innenhohlkörpern und eine zweite Gruppe von Innenhohlkörpern gebildet. Jede Gruppe weist wenigstens einen Innenhohlkörper auf. Die Innenhohlkörper der ersten Gruppe sind in einer Umfangsrichtung um die Drehachse um einen Drehwinkel versetzt gegenüber dem wenigstens einen Innenhohlkörper der zweiten Gruppe. Der Drehwinkel kann so gewählt werden, dass eine radiale Ebene entlang der Drehachse durch die Stützabschnitte des wenigstens einen Innenhohlkörpers der zweiten Gruppe eine Seitenhalbierende gegenüber einem Stegabschnitt des wenigstens einen Innenhohlkörpers der ersten Gruppe darstellt.

Bei einem Ausführungsbeispiel ist lediglich eine einzige Gruppe von Innenhohlkörpern vorhanden.

In einer Projektion auf eine Ebene, die rechtwinkelig zur Drehachse ausgerichtet ist, können sämtliche Stützabschnitte aller Innenhohlkörper in Umfangsrichtung um die Drehachse gleichmäßig verteilt angeordnet.

Vorzugsweise haben alle Innenhohlkörper der ersten Gruppe dieselbe Drehausrichtung um die Drehachse. In Axialrichtung betrachtet fluchten die Innenhohlkörper der ersten Gruppe. Zusätzlich oder alternativ haben sämtliche Innenhohlkörper der zweiten Gruppe dieselbe Drehausrichtung um die Drehachse. Die Innenhohlkörper der zweiten Gruppe können somit in Axialrichtung fluchten.

Sind mehrere Gruppen von Innenhohlköropern vorhanden, können in Axialrichtung unmittelbar - mit Abstand oder aneinander anliegend - aufeinanderfolgend zwei Innenhohlkörper unterschiedlicher Gruppen angeordnet werden.

Es ist außerdem vorteilhaft, wenn der wenigstens eine Außenhohlkörper mehrere Aufnahmen aufweist. Die Aufnahmen sind vorzugsweise in einer Umfangsrichtung um die Drehachse mit Abstand angeordnet und beispielsweise gleichmäßig verteilt.

In Axialrichtung können mehrere Aufnahmen mit Abstand zueinander an dem wenigstens einen Außenhohlkörper vorhanden sein. Diese Aufnahmen können in Axialrichtung geradlinig nebeneinander oder gleichzeitig in Umfangsrichtung um die Drehachse versetzt zueinander angeordnet sein. Im letzteren Fall kann der Außenhohlkörper eine sozusagen tordierte Form aufweisen. Dann können die Stützabschnitte der Innenhohlkörper einer gemeinsamen Gruppe dem Versatz der Aufnahmen in Umfangsrichtung folgend ebenfalls zueinander versetzt sein. Wenn die Aufnahmen in Umfangsrichtung versetzt angeordnet sind, kann bei einer Drehung der als Werkzeugträgerbaugruppe ausgebildeten Trägerbaugruppe um die Drehachse ein sukzessiver Eingriff der Werkzeuge in ein Werkstück erreicht werden.

Bei einer bevorzugten Ausführungsform weist die Trägerbaugruppe einen Haltekörper auf. Der wenigstens eine Außenhohlkörper und/oder die Innenhohlkörper können mittelbar oder unmittelbar am Haltekörper befestigt sein. Der Haltekörper kann zum Befestigen des wenigstens einen Außenhohlkörpers und/oder der Innenhohlkörper einen scheibenförmigen und/oder ringförmigen Teil aufweisen, beispielsweise einen Ringflansch. An dem Haltekörper kann außerdem ein Spannkörper vorhanden sein, mittels der die Trägerbaugruppe in einem Spannfutter einer Werkzeugmaschine gehalten bzw. gespannt werden kann. Der Spannkörper kann beispielsweise ein Hohlschaftkegel oder eine andere geeignete Spannkörper sein, beispielsweise eingerichtet zum Einspannen mittels eines sogenannten PowerLock-Spannsystem.

Es ist außerdem vorteilhaft, wenn die Trägerbaugruppe mehrere sich vorzugsweise parallel zur Drehachse erstreckende Stifte aufweist. Die Stifte sind bevorzugt mit dem Haltekörper verbunden. Jeder Innenhohlkörper kann sich beispielsweise an seiner radial inneren Seite an mehreren Stiften abstützen, insbesondere radial innen an jedem gekrümmten Stützabschnitt. Es ist beispielsweise möglich, mehrere Stifte der ersten Gruppe von Innenhohlkörpern zuzuordnen und mehrere andere Stifte der zweiten Gruppe von Innenhohlkörpern zuzuordnen. Die Stifte einer Gruppe erstrecken sich beispielsweise radial außerhalb der Innenhohlkörper der jeweils anderen Gruppe.

Bei einem tordiert ausgebildeten Außenhohlkörper mit in Umfangsrichtung versetzt und axial benachbart angeordneten Aufnahmen bzw. Bauteilen können die Stifte auch eine nicht lineare Erstreckung aufweisen.

Vorzugsweise sind die Stifte aus einem Leichtmetall oder einem Verbundwerkstoff hergestellt. Als Verbundwerkstoff kann ein Verbundwerkstoff eingesetzt werden, wie er vorstehend im Zusammenhang mit den Innenhohlkörpern und dem wenigstens einen Außenhohlkörper erläutert wurde.

Die Trägerbaugruppe hat vorzugsweise wenigstens einen Bauteiltragkörper, der zum Anbringen und insbesondere zum lösbaren Anbringen des wenigstens einen Bauteils eingerichtet ist. Der Bauteiltragkörper ist außerdem dazu eingerichtet, an der wenigstens einen Aufnahme angeordnet zu werden. Der Bauteiltragkörper stützt sich insbesondere formschlüssig im Bereich der Aufnahme an dem wenigstens einen Außenhohlkörper ab, so dass Kräfte in Umfangsrichtung um die Drehachse durch den wenigstens einen Außenhohlkörper abgestützt werden.

Bei einer bevorzugten Ausführungsform hat der wenigstens eine Bauteiltragkörper einen Befestigungsabschnitt. Der Befestigungsabschnitt ragt durch eine Durchbrechung der Aufnahme durch den Außenhohlkörper hindurch nach radial innen und kann dort an einem der Stifte befestigt sein. Beispielsweise kann der Befestigungsabschnitt dazu ein sich in Axialrichtung erstreckendes Befestigungsloch aufweisen.

Eine Trägerbaugruppe lässt sich erfindungsgemäß wie folgt zusammenbauen:
Zunächst wird wenigstens ein Außenhohlkörper um eine Drehachse angeordnet. Anschließend werden die Innenhohlkörper in Axialrichtung benachbart in den Außenhohlkörper eingesetzt, dass sie sich radial innen am wenigstens einen Außenhohlkörper abstützen. Die Anlage zwischen den Innenhohlkörpern und dem Außenhohlkörper ist vorzugsweise an den Stützabschnitten der Innenhohlkörper gebildet.

Anschließend kann wenigstens ein Bauteil am Außenhohlkörper angebracht werden, beispielsweise mit Hilfe des wenigstens einen Bauteiltragkörpers. Das Verfahren kann insbesondere bei den vorstehend beschriebenen Ausführungsbeispielen der Trägerbaugruppe eingesetzt werden und ermöglicht einen besonders einfachen modularen Aufbau.

Vorteilhafte Ausgestaltungen der Erfindung ergeben sich aus den abhängigen Patentansprüchen, der Beschreibung und den Zeichnungen. In den Zeichnungen zeigen:
Figur 1 ein Ausführungsbeispiel einer Trägerbaugruppe in perspektivischer Darstellung,
Figur 2 die Trägerbaugruppe aus Figur 1 in einer Ansicht entlang einer Drehachse,
Figuren 3-7 jeweils eine perspektivische Darstellung unterschiedlicher Stadien während eines Zusammenbaus der Trägerbaugruppe gemäß den Figuren 1 und 2,
Figur 8 eine schematische Prinzipdarstellung der Trägerbaugruppe aus den Figuren 1 und 2, die das Abstützen von Fliehkräften durch die Innenhohlkörper der Trägerbaugruppe veranschaulicht,
Figur 9 eine Prinzipdarstellung der Trägerbaugruppe aus den Figuren 1 und 2, die das Abstützen von Momenten durch den wenigstens einen Außenhohlkörper der Trägerbaugruppe veranschaulicht,
Figur 10 bis 15 jeweils eine stark schematisierte Prinzipdarstellung eines weiteren Ausführungsbeispiels einer Trägerbaugruppe,
Figur 16 zwei mit Versatz angeordnete Innenhohlkörper der Trägerbaugruppe aus Figur 15 und
Figur 17 einen Stift der Trägerbaugruppe aus Figur 15.

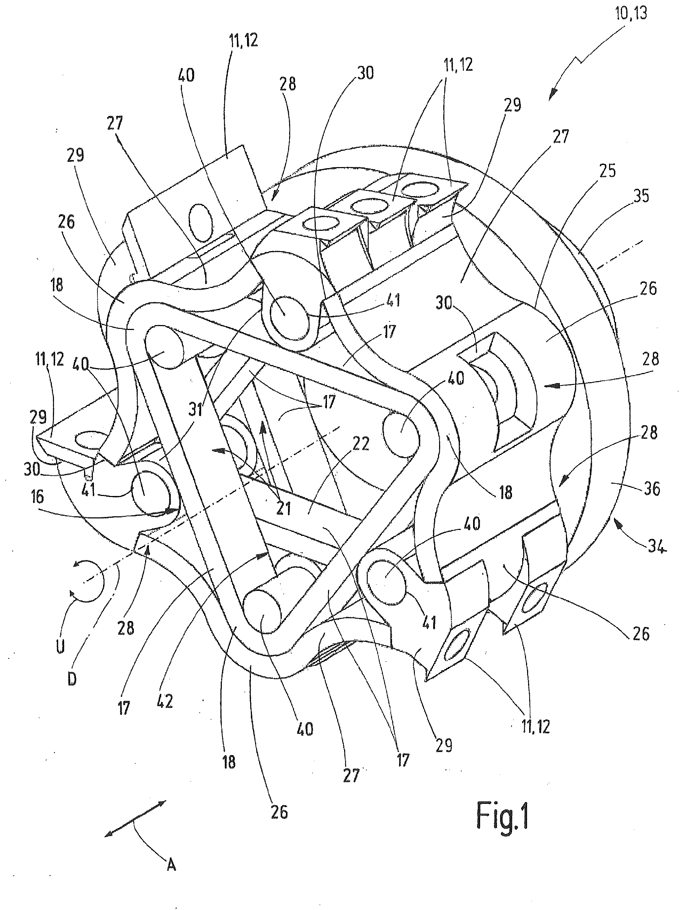

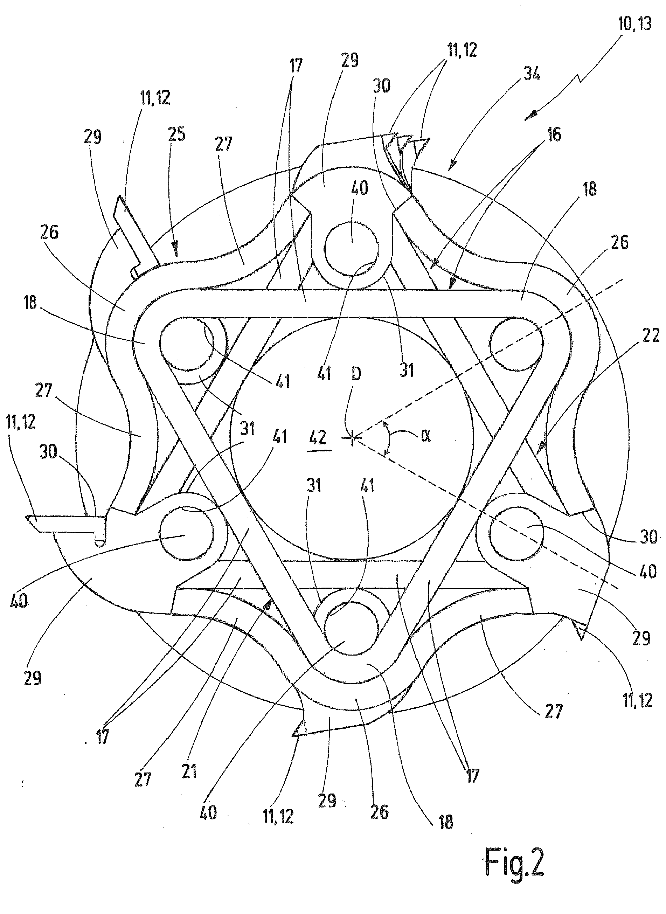

In Figur 1 ist ein Ausführungsbeispiel einer Trägerbaugruppe 10 in einer perspektivischen Darstellung veranschaulicht. Figur 2 zeigt die Trägerbaugruppe 10 aus Figur 1 in einer Ansicht entlang einer Drehachse D. Die Trägerbaugruppe 10 ist dazu eingerichtet, um die Drehachse D drehend angetrieben zu werden. Sie ist außerdem dazu eingerichtet, wenigstens ein Bauteil 11 zu tragen, das auf einer Kreisbahn um die Drehachse D bewegt wird, wenn die Trägerbaugruppe 10 drehend angetrieben wird. Bei dem Bauteil 11 handelt es sich beispielsgemäß um ein Schneidwerkzeug, beispielsweise eine Schneidplatte 12. Beispielsgemäß sind mehrere Schneidplatten 12 in einer Umfangsrichtung U um die Drehachse D verteilt angeordnet. In einer Axialrichtung A parallel zur Drehachse D können mehrere Schneidplatten 12 mit Abstand oder ohne Abstand benachbart angeordnet sein.

Beim Ausführungsbeispiel bildet die Trägerbaugruppe 10 somit eine Werkzeugträgerbaugruppe 13. Die Werkzeugträgerbaugruppe 13 ist dazu eingerichtet, in ein Spannfutter einer Werkzeugspindel einer Werkzeugmaschine eingesetzt zu werden. Die Werkzeugträgerbaugruppe 13 mit den daran angeordneten Schneidplatten 12 kann beispielsweise einen Fräser, einen Bohrer, einen Hobel oder dergleichen bilden.

Die Trägerbaugruppe 10 gemäß der vorliegenden Erfindung kann auch auf anderen technischen Gebieten als bei drehend angetriebenen Werkzeugen eingesetzt werden, insbesondere bei sämtlichen anderen Anwendungen, bei denen ein Bauteil 11 drehend um eine Drehachse D an einem Außenumfang gelagert werden muss, beispielsweise bei Bremsen, Kupplungen oder ähnlichem.

Die Trägerbaugruppe 10 weist mehrere Innenhohlkörper 16 auf, die in Axialrichtung A nebeneinander und vorzugsweise unmittelbar nebeneinander angeordnet sind. Die Innenhohlkörper 16 umschließen die Drehachse D. Die Anzahl der Innenhohlkörper 16 kann variieren. Beim Ausführungsbeispiel sind drei Innenhohlkörper 16 vorhanden. Die Innenhohlkörper 16 sind beispielsgemäß identisch ausgestaltet.

Jeder Innenhohlkörper 16 hat mehrere sich beispielsgemäß gerade erstreckende Stegabschnitte 17 sowie mehrere Stützabschnitte gekrümmte Stützabschnitte 18. An jedem Stützabschnitt 18 sind zwei unmittelbar benachbarte Stegabschnitte 17 miteinander verbunden bzw. gehen ineinander über. Beim Ausführungsbeispiel sind die Innenhohlkörper 16 integral ausgestaltet und nicht aus mehreren Einzelteilen mechanisch zusammengebaut.

Die gekrümmten Stützabschnitten 18 bilden radial innen, auf der der Drehachse D zugewandten Seite, einen Innenradius und auf der von der Drehachse D abgewandten radial äußeren Seite einen Außenradius. Die Stützabschnitte 18 gehen nahtlos in jeweils zwei Stegabschnitte 17 über. Der Querschnitt der Innenhohlkörper 16 ist beispielsgemäß rechteckig, wobei die Dimension in Axialrichtung A größer ist als rechtwinklig dazu.

Die Innenhohlkörper 16 haben bei einem Ausführungsbeispiel eine polygonförmige Gestalt, wobei sich die Stegabschnitte 17 entlang der Seiten eines regelmäßigen Polygons erstrecken. Beispielsgemäß sind die Innenhohlkörper 16 dreieckförmig und haben somit drei gerade verlaufende Stegabschnitte 17 und drei gekrümmte Stützabschnitte 18. Abhängig von der radialen Größe der Trägerbaugruppe 10 können auch Innenhohlkörper 16 mit mehr als drei Stegabschnitten 17 und mehr als drei Stützabschnitten 18 eingesetzt werden.

Die vorhandenen Innenhohlkörper 16 sind beispielsgemäß in mehreren Gruppen unterteilt. Bei dem hier dargestellten Ausführungsbeispiel bilden zwei der Innenhohlkörper 16 eine erste Gruppe 21 und der weitere Innenhohlkörper 16 eine zweite Gruppe 22. Die Anzahl der Innenhohlkörper 16 pro Gruppe 21 bzw. 22 kann variieren. Es können auch mehr als zwei Gruppen 21, 22 vorhanden sein.

Die Innenhohlkörper 16 einer gemeinsamen Gruppe 21 oder 22 sind beispielsgemäß in Axialrichtung A fluchtend angeordnet. Sie haben in Umfangsrichtung U um die Drehachse D jeweils dieselbe Drehausrichtung. In Figur 2 ist deshalb von der ersten Gruppe 21 lediglich einer der Innenhohlkörper 16 zu erkennen.

Demgegenüber sind die Innenhohlkörper 16 der ersten Gruppe 21 gegenüber den Innenhohlkörpern 16 der zweiten Gruppe 22 um einen Drehwinkel α um die Drehachse D versetzt bzw. gegeneinander gedreht angeordnet. Der Drehwinkel α beträgt beim Ausführungsbeispiel 60°. Der Betrag des Drehwinkels α ist so gewählt, dass in einer Ebene rechtwinklig zur Drehachse D betrachtet jede Seitenhalbierende durch die Stegabschnitte 17 der Innenhohlkörper 16 der ersten Gruppe 21 eine Winkelhalbierende durch die Stützabschnitte 18 der Innenhohlkörper 16 der zweiten Gruppe 22 darstellt.

Unabhängig von der Anzahl der Gruppen sind die Drehwinkel α zwischen den Innenhohlkörpern unterschiedlicher Gruppen so gewählt, dass die Stützabschnitte 18 sämtlicher Innenhohlkörper 16 in Umfangsrichtung U um die Drehachse D gleichmäßig verteilt angeordnet sind, wie es in Figur 2 am besten zu erkennen ist.

Die Innenhohlkörper 16 unterschiedlicher Gruppen 21, 22 sind in Axialrichtung A unmittelbar aufeinanderfolgend angeordnet. Beim Ausführungsbeispiel ist der Innenhohlkörper der zweiten Gruppe 22 zwischen den beiden Innenhohlkörpern 16 der ersten Gruppe 21 angeordnet.

Wenigstens ein Außenhohlkörper 25 umschließt die Drehachse D in Umfangsrichtung U vollständig. In Abwandlung zum veranschaulichten Ausführungsbeispiel könnten in Axialrichtung A nebeneinander auch mehrere Außenhohlkörper 25 angeordnet sein. Beim Ausführungsbeispiel ist ein einziger Außenhohlkörper 25 vorhanden. Der wenigstens eine Außenhohlkörper 25 hat in Axialrichtung A eine Dimension, die zumindest so groß ist, wie die gesamte Dimension in Axialrichtung A aller Innenhohlkörper 16.

Der Außenhohlkörper 25 hat in Umfangsrichtung U um die Drehachse D eine wellige Form. An den Stellen, an denen er an den Innenhohlkörpern 16 anliegt, weist er einen radial nach außen gekrümmten konvexen Abschnitt 26 auf. Die wenigstens eine Krümmungsachse des konvexen Abschnitts 26 erstreckt sich parallel zur Drehachse D radial innerhalb der Außenhohlkörpers 25. Beispielsgemäß sind zwei in Umfangsrichtung U um die Drehachse D unmittelbar benachbarte konvexe Abschnitte 26 durch einen radial nach innen gekrümmten konkaven Abschnitt 27 miteinander verbunden. Die wenigstens eine Krümmungsachse des konkaven Abschnitts 27 erstreckt sich parallel zur Drehachse D radial außerhalb der Außenhohlkörpers 25.

Beim Ausführungsbeispiel ist der Außenhohlkörper 25 integral ausgestaltet und nicht aus mehreren Einzelteilen mechanisch zusammengebaut.

Der wenigstens eine Außenhohlkörper 25 hat wenigstens eine Aufnahme 28 zum Anbringen des wenigstens einen Bauteils. Beispielsgemäß sind mehrere Aufnahmen 28 am Außenhohlkörper vorhanden. Beim Ausführungsbeispiel befinden sich alle Aufnahmen 28 jeweils im Bereich eines konvexen Abschnitts 26 bzw. jeweils in Radialrichtung zur Drehachse D benachbart zu einem Stützabschnitt 18 wenigstens eines Innenhohlkörpers 16. Die wenigstens eine Aufnahme 28 ist zum Anbringen jeweils eines Bauteiltragkörpers 29 eingerichtet. An dem Bauteiltragkörper 29 kann jeweils ein Bauteil 11 oder es können jeweils mehrere Bauteile 11 lösbar angebracht werden. Beim Ausführungsbeispiel sind mehrere Bauteiltragkörper 29 für die Schneidplatten 12 der Werkzeugträgerbaugruppe 13 vorhanden.

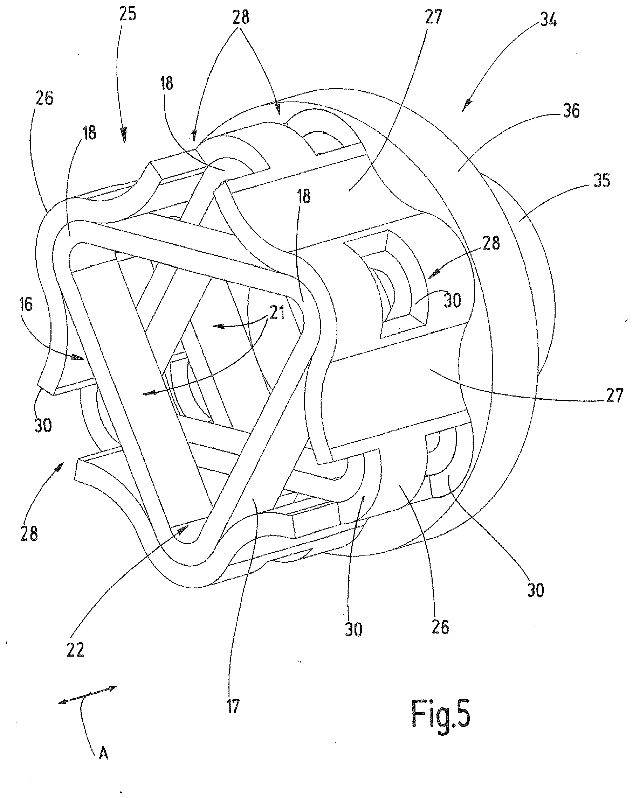

Wie es zum Beispiel in den Figuren 1 und 5 zu erkennen ist, weist jede Aufnahme 28 eine Durchbrechung 30 auf, die den Außenhohlkörper 25 radial zur Drehachse D vollständig durchsetzt. Ein Befestigungsabschnitt 31 des wenigstens einen Bauteiltragkörpers 29 ragt durch die zugeordnete Durchbrechung 30 radial nach innen. Mittels des Befestigungsabschnitts 31 wird der betreffende Bauteiltragkörper 29 an einem Bereich radial innen vom Außenhohlkörper 25 fixiert.

Der Bauteiltragkörper 29 stützt sich radial außen am Außenhohlkörper 25 ab. Dabei kann eine formschlüssige Anlage zwischen dem Bauteiltragkörper 29 und dem Außenhohlkörper 25 hergestellt werden. Kräfte und Momente, die über das Bauteil 11 bzw. die Schneidplatte 12 auf den Bauteiltragkörper 29 einwirken, werden am Außenhohlkörper 25 abgestützt, insbesondere Momente in Umfangsrichtung U um die Drehachse D.

Die Trägerbaugruppe 10 weist bei dem hier veranschaulichten Ausführungsbeispiel einen Haltekörper 34 auf, der als Schnittstelle zu einer Maschine, insbesondere eine Werkzeugmaschine eingerichtet ist. Der Haltekörper 34 hat hierzu beim Ausführungsbeispiel einen Spannkörper 35, der zum Einspannen in ein Spannfutter einer Werkzeugmaschine eingerichtet ist. Der Spannkörper 35 kann beispielsweise als Schaft, insbesondere Hohlschaftkegel, ausgebildet sein und in seiner Ausgestaltung einem definierten Standard entsprechen. Der Spannkörper 35 ist entlang der Drehachse D bzw. koaxial zur Drehachse D angeordnet.

Der Haltekörper 34 hat außerdem einen sich schräg oder rechtwinklig zur Drehachse D erstreckenden plattenförmigen Teil und beim Ausführungsbeispiel einen kreisringförmigen Teil oder Flansch 36. Der kreisringförmige Teil bzw. der Flansch 36 ist koaxial zur Drehachse D angeordnet. Auf einer Anbringungsseite 37 hat der Flansch 36 Anbringungsmittel zum Anbringen der Innenhohlkörper 16 und/oder des wenigstens einen Außenhohlkörpers 25. Beim Ausführungsbeispiel weist der Flansch 36 eine an der Anbringungsseite 37 hin offene Nut 38 zum Einstecken eines axialen Endbereichs des Außenhohlkörpers 25 auf. Der Außenhohlkörper 25 kann kraftschlüssig und/oder formschlüssig und/oder stoffschlüssig und/oder durch eine Haftverbindung in der Nut 38 gehalten werden. Entsprechend dem wellenförmigen Verlauf des beispielsgemäßen Außenhohlkörpers 25 hat die Nut 38 ebenfalls nach radial außen gekrümmte Abschnitte, die über jeweils einen nach radial innen gekrümmten Abschnitt miteinander verbunden sind.

Radial innerhalb der Nut 38 sind im Flansch 36 mehrere Einstecköffnungen 39 für jeweils einen Stift 40 vorhanden. Jeder Stift 40 erstreckt sich in Axialrichtung A. Die Stifte 40 sind in Umfangsrichtung U um die Drehachse D gleichmäßig verteilt. Sie weisen beim Ausführungsbeispiel jeweils denselben Abstand zur Drehachse D auf.

Die Stifte 40 haben beim Ausführungsbeispiel einen kreisrunden Querschnitt. Dementsprechend haben die Einstecköffnungen 39 ebenfalls einen kreisrunden Querschnitt. Die Stifte 40 können mit einem axialen Ende kraftschlüssig und/oder formschlüssig und/oder stoffschlüssig und/oder durch eine Haftverbindung in einer jeweils zugeordneten Einstecköffnung 39 angeordnet werden.

Mittels der Stifte 40 können die Innenhohlkörper 16 und beim Ausführungsbeispiel zusätzlich die Bauteiltragkörper 29 am Haltekörper 34 befestigt werden. Die Stifte 40 sind so positioniert, dass sich jeder Innenhohlkörper 16 mit seinen Stützabschnitten 18 an einem Stift 40 abstützt. Dabei liegt der Innenradius jeder Stützabschnitt 18 an einer Umfangsfläche eines Stifts 40 an.

Die Innenhohlkörper 16 sind beim Ausführungsbeispiel in die erste Gruppe 21 und die zweite Gruppe 22 unterteilt. Jeder Gruppe 21, 22 sind mehrere Stifte 40 und beispielsgemäß jeweils drei Stifte 40 zugeordnet. Die Stifte 40 definieren somit jeweils die Drehausrichtung der Innenhohlkörper 16 einer gemeinsamen Gruppe 21, indem sie die Positionen der Stützabschnitte 18 vorgeben.

Die der ersten Gruppe 21 zugeordneten Stifte 40 erstrecken sich radial innerhalb der Innenhohlkörper 16 der ersten Gruppe 21 und radial außerhalb der Innenhohlkörper 16 der zweiten Gruppe 22. Die der zweiten Gruppe 22 zugeordneten Stifte 40 erstrecken sich radial innerhalb der Innenhohlkörper 16 der zweiten Gruppe 22 und radial außerhalb der Innenhohlkörper 16 der ersten Gruppe 21.

Beim Ausführungsbeispiel werden die Stifte 40 außerdem dazu verwendet, den wenigstens einen Bauteiltragkörper 29 und beispielsgemäß die mehreren Bauteiltragkörper 29 zu befestigen. Hierzu weist der Befestigungsabschnitt 31 jedes Bauteiltragkörpers 29 ein sich in Axialrichtung A erstreckendes Befestigungsloch 41 auf. Einer der Stifte 40 erstreckt sich durch das Befestigungsloch 41 hindurch und sichert den jeweiligen Bauteiltragkörper 29 dadurch am wenigstens einen Außenhohlkörper 25.

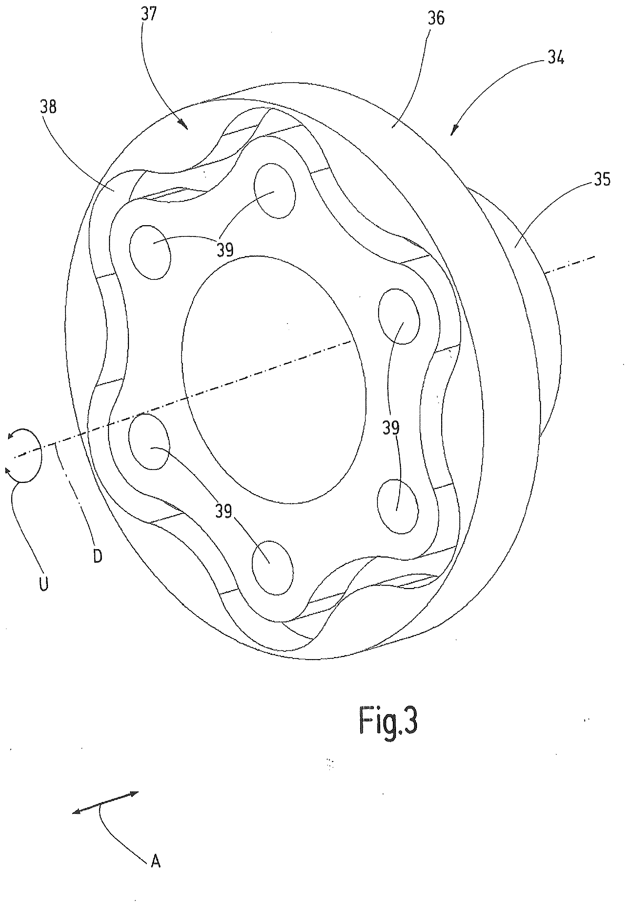

In den Figuren 1 und 2 ist die Trägerbaugruppe 10 und beispielsgemäß die Werkzeugträgerbaugruppe 13 in montiertem Zustand veranschaulicht. Es ist zu erkennen, dass nicht an jeder Aufnahme 28 notwendigerweise ein Bauteiltragkörper 29 bzw. ein Bauteil 11 angeordnet sein muss. Die Montageschritte zum Zusammenbau der Trägerbaugruppe 10 sind schematisch in den Figuren 3-7 dargestellt.

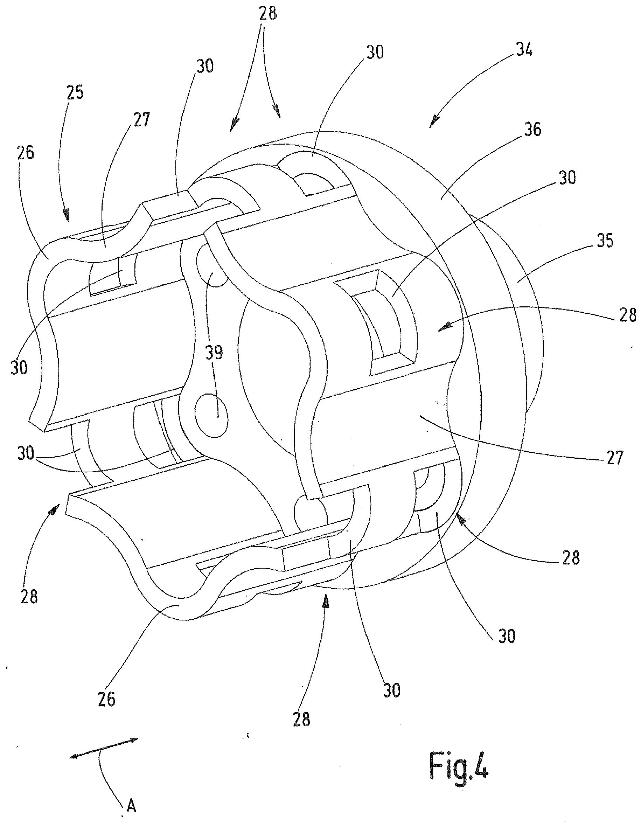

Zunächst wird der Haltekörper 34 bereitgestellt (Figur 3) und anschließend der Außenhohlkörper 25 in der Nut 38 befestigt (Figur 4).

Im Anschluss daran können beispielsweise die Innenhohlkörper 16 in den Außenhohlkörper 25 eingesetzt werden (Figur 5). Hierzu werden beim Ausführungsbeispiel die Innenhohlkörper 16 der ersten Gruppe 21 und der zweiten Gruppe 22 abwechselnd unter dem Drehwinkel α drehversetzt zueinander in den Außenhohlkörper 25 eingesetzt. Mit anderen Worten sind der wenigstens eine Innenhohlkörper 16 der ersten Gruppe 21 und der wenigstens eine Innenhohlkörper 16 der zweiten Gruppe 22 in Axialrichtung A abwechselnd aufeinanderfolgend angeordnet. Die Innenhohlkörper 16 einer einzigen Gruppe 21 bzw. 22 liegen in Axialrichtung A somit nicht unmittelbar aneinander an. Zwischen zwei in Axialrichtung A benachbarten Innenhohlkörpern 16 einer einzigen Gruppe 21 oder 22, ist somit jeweils ein Innenhohlkörper 16 der jeweils anderen Gruppe 22 oder 21 angeordnet.

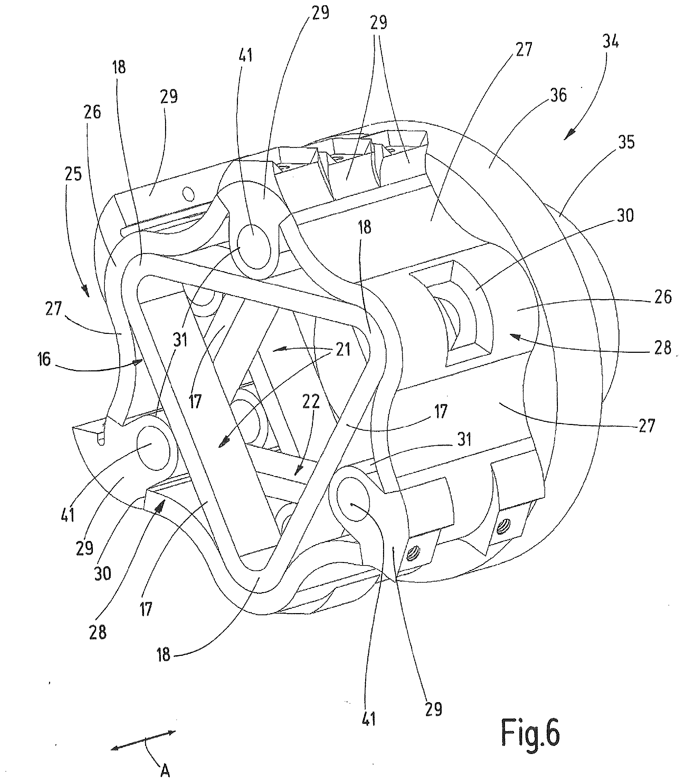

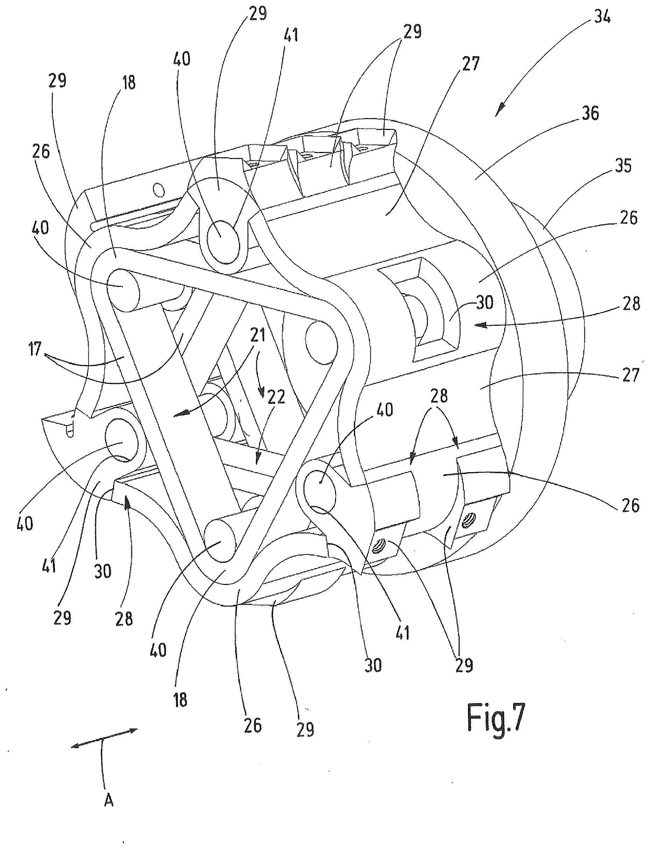

Nach dem Einsetzen der Innenhohlkörper 16 wird der wenigstens eine Bauteiltragkörper 29 an der zugeordneten Aufnahme 28 des Außenhohlkörpers 25 angeordnet, so dass sein Befestigungsabschnitt 31 durch die Durchbrechung 30 hindurch ragt (Figur 6). Anschließend werden die Stifte 40 in Axialrichtung A eingesteckt, so dass durch jedes Befestigungsloch 41 jedes Bauteiltragkörpers 29 ein Stift 40 hindurch ragt und jeder Innenhohlkörper 16 mit seinem Stützabschnitt 18 an einem Stift 40 anliegt (Figur 7). Das axiale Ende der Stifte 40 ist in jeweils eine zugeordnete Einstecköffnung 39 am Flansch 36 eingesteckt.

Schließlich können im letzten Schritt die Bauteile 11 bzw. Schneidplatten 12 an den Bauteiltragkörper 29 angeordnet werden, beispielsweise durch Löten und/oder Schrauben oder auf eine andere geeignete Weise.

Im Bereich um die Drehachse D ist ein Innenfreiraum 42 gebildet (Figuren 1 und 2), der in Umfangsrichtung U um die Drehachse D durch die Innenhohlkörper 16 und den wenigstens einen Außenhohlkörper 25 umschlossen wird. Der Innenfreiraum 42 kann beispielsweise zum Hindurchleiten von Kühlschmiermittel und/oder zur Späneabfuhr genutzt werden. Aufgrund dieser Hohlkörperstruktur ist die Trägerbaugruppe 10 sehr leicht. Außerdem kann die Trägerbaugruppe 10 durch die modulare Ausführung in Axialrichtung in unterschiedlichen Längen unter Verwendung einer hoher Anzahl gleicher Teile aufgebaut werden.

Beim Ausführungsbeispiel sind der wenigstens eine Außenhohlkörper 25 und die Innenhohlkörper 16 jeweils aus faserverstärktem Verbundmaterial hergestellt. Dabei werden Verstärkungsfasern in eine Kunststoffmatrix eingebettet. Die Verstärkungsfasern erstrecken sich bei den Innenhohlkörpern 16 entlang des Verlaufs der polygonähnlichen Innenhohlkörper 16 um die Drehachse D. Die Verstärkungsfasern sind daher im Wesentlichen parallel zu einer Ebene ausgerichtet, die rechtwinklig zur Drehachse D orientiert ist. Dadurch erstrecken sich die Verstärkungsfasern gestreckt entlang der Geraden Stegabschnitte 17 und verlaufen in den Stützabschnitten 18 entsprechend der Krümmung des Innenradius bzw. des Außenradius.

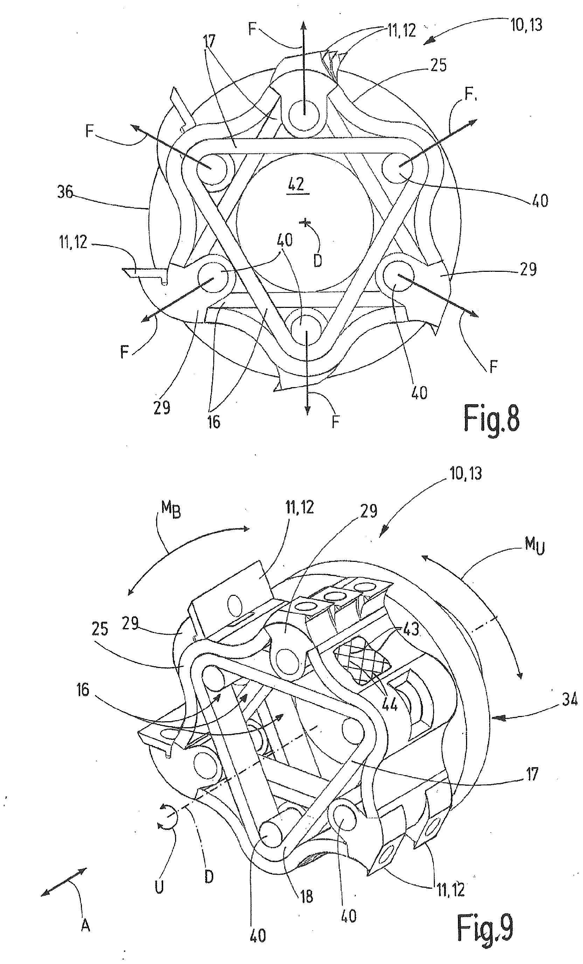

Die Verstärkungsfasern in Verbundwerkstoffen nehmen insbesondere Zugkräfte auf. Bei einer Drehung der Trägerbaugruppe 10 um die Drehachse D wirken radial nach außen Fliehkräfte F, die in Figur 8 schematisch veranschaulicht sind. Die Fliehkräfte F wirken insbesondere an den Stellen, an denen am Außenhohlkörper 25 ein Bauteil 11 angeordnet ist. Sie werden über den jeweiligen Bauteiltragkörper 29 auf einen Stift 40 übertragen, der wiederum radial innen durch einen oder mehrere Innenhohlkörper 16 einer Gruppe 21 oder 22 angeordnet ist und somit gegen eine Bewegung nach radial außen abgestützt ist. Aufgrund der geradlinig verlaufenden Stegabschnitte 17 und den dort gestreckt verlaufenden Verstärkungsfasern werden die Stegabschnitte 17 durch die Fliehkräfte F auf Zug beansprucht, so dass die Fliehkräfte F sehr gut durch die Innenhohlkörper 16 abgestützt werden können.

Die Innenhohlkörper 16 sind durch diese Ausgestaltung allerdings weniger geeignet, ein Drehmoment M_{U} in Umfangsrichtung U um die Drehachse D sowie ein Biegemoment M_{B} um eine rechtwinklig zur Drehachse D ausgerichtete Biegeachse abzustützen. Zum Abstützen dieser Momente M_{U}, M_{B} dient der wenigstens eine Außenhohlkörper 25. Der Außenhohlkörper 25 besteht beim Ausführungsbeispiel aus einem Verbundmaterial, dessen Verstärkungsfasern 43, 44 gekreuzt angeordnet sind. Ein Teil der Verstärkungsfasern 43 ist gegenüber der Axialrichtung A und der Erstreckungsrichtung des wenigstens einen Außenhohlkörpers 25 um die Drehachse D in einem Winkel von -45° angeordnet und ein anderer Teil der Verstärkungsfasern 44 ist gegenüber der Axialrichtung A und der Erstreckungsrichtung des wenigstens einen Außenhohlkörpers 25 um die Drehachse D in einem Winkel von +45° angeordnet. Die gekreuzte Anordnung der Verstärkungsfasern ist schematisch in der teilgeschnittenen Darstellung des Außenhohlkörpers in Figur 9 veranschaulicht. Die Verstärkungsfasern 43, 44 können ein Gewebe oder ein Gelege bilden. Die Verstärkungsfasern können auch in beliebigen zusätzlichen oder auch in einer oder mehreren anderen Ausrichtungen im wenigstens einen Außenhohlkörper 25 angeordnet sein.

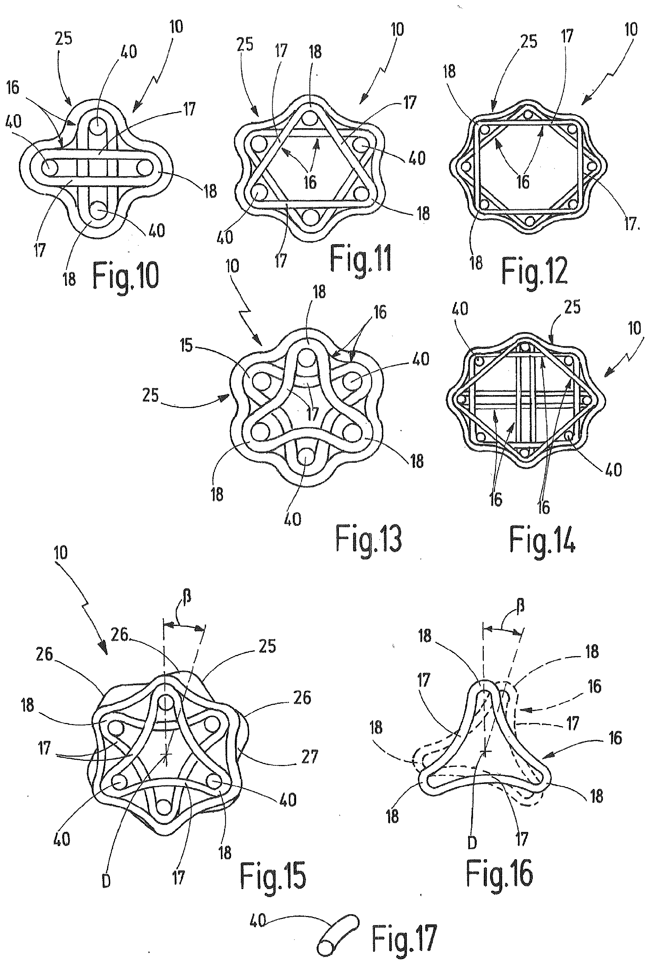

In den Figuren 10-15 sind verschiedene Ausführungsbeispiele einer Trägerbaugruppe 10 stark schematisiert veranschaulicht, wobei jeweils die Kontur des wenigstens einen Außenhohlkörpers 25 und der Innenhohlkörper 16 dargestellt ist.

Beim Ausführungsbeispiel gemäß Figur 10 weist jeder Innenhohlkörper zwei geradlinig verlaufende Stegabschnitte 17 und zwei mit einem Innenradius und einem Außenradius gekrümmte Stützabschnitte 18 auf.

Die Innenhohlkörper 16 und der Außenhohlkörper 25 der Trägerbaugruppe 10 gemäß Figur 11 entsprechen den anhand der Figuren 1-10 erläuterten Ausführungsbeispiel, bei dem die Innenhohlkörper drei Stegabschnitte 17 und drei Stützabschnitte 18 aufweisen.

In Figur 12 ist ein Ausführungsbeispiel der Trägerbaugruppe 10 veranschaulicht, wobei die Innenhohlkörper eine im Wesentlichen quadratische Kontur haben mit jeweils vier Stegabschnitten 17 und vier Stützabschnitten 18. In Figur 14 ist ein Ausführungsbeispiel veranschaulicht, bei dem die Innenhohlkörper 16 aus den Figuren 10 und 12 verwendet werden, also Innenhohlkörper 16 mit zwei Stegabschnitten 17 und zwei Stützabschnitten 18 sowie Innenhohlkörper mit vier Stegabschnitten 17 und vier Stützabschnitten 18.

Bei den bislang beschriebenen Ausführungsbeispielen erstrecken sich die Stegabschnitte 17 zwischen den Stützabschnitten 18 geradlinig. In Figur 13 ist eine abgewandelte Ausführungsform gezeigt, bei der die Innenhohlkörper 16 beispielsweise drei Stützabschnitte 18 aufweisen und sich dazwischen befindliche Stegabschnitte 17 um jeweils wenigstens eine Krümmungsachse gekrümmt erstrecken. Die wenigstens eine Krümmungsachse ist parallel zur Drehachse ausgerichtet und befindet sich beispielsgemäß radial zur Drehachse D betrachtet außerhalb des betreffenden Innenhohlkörpers 16. Von radial außen gesehen krümmen sich die Stegabschnitte 17 somit konkav nach radial innen.

Die bisher beschriebenen Ausführungsbeispiele können miteinander kombiniert werden. Es können, z.B. beliebige Formen von Innenhohlkörpern 16 in einer gemeinsamen Trägerbaugruppe 10 verwendet werden. Insbesondere können Innenhohlkörper 16 unterschiedlicher Gruppen 20, 21 eine unterschiedliche Gestalt aufweisen, beispielsweise unterschiedlich viele Stützabschnitte 18 bzw. Stegabschnitte 17 aufweisen und/oder unterschiedlich geformte Stegabschnitte 17 aufweisen.

Bei allen Ausführungsbeispielen der Innenhohlkörper 16 können die Stegabschnitte 17 anstelle eines geradlinigen Verlaufs auch jeweils einen gekrümmten Verlauf aufweisen, analog zum Ausführungsbeispiel gemäß Figur 13.

Bei den bisher beschriebenen Ausführungsbeispielen ist der Außenhohlkörper 25 derart ausgestaltet, dass sich die Maxima der konvexen Abschnitte 26 bzw. die Minima der konkaven Abschnitte 27 aufgrund der Dimension des Außenhohlkörpers 25 entlang einer jeweiligen Geraden erstrecken, die parallel zur Drehachse D ausgerichtet ist. Im Unterschied dazu zeigt Figur 15 ein Ausführungsbeispiel eines Außenhohlkörpers 25, der um die Drehachse D tordiert ist, so dass sich die Maxima der konvexen Abschnitte 26 und die Minima der konkaven Abschnitte 27 nicht entlang einer Geraden, sondern entlang eines Abschnitts einer Helix um die Drehachse D erstrecken. Das Minimum eines konkaven Abschnitts 27 bzw. das Maximum eines konvexen Abschnitts 26 ist daher an den beiden axialen Enden des Außenhohlkörpers 25 um einen Versatz β um die Drehachse D versetzt. Dies führt dazu, dass die Innenhohlkörper 16 einer gemeinsamen Gruppe 20 bzw. 21, die an den beiden axialen Enden des Außenhohlkörpers 25 angeordnet sind, ebenfalls um den Versatz β zueinander versetzt sind, wie es in Figur 16 schematisch veranschaulicht ist. Zwischen den beiden in Axialrichtung endseitigen Innenhohlkörpern 16 dieser Gruppe 20 bzw. 21 können weitere Innenhohlkörper 16 dieser Gruppe angeordnet sein, die der Übersichtlichkeit halber nicht dargestellt sind. Abhängig von der Anzahl der Innenhohlkörper 16 sind diese um einen Bruchteil des Versatzes β gegeneinander um die Drehachse D gedreht.

Bei dem in Figur 15 veranschaulichten Ausführungsbeispiel der Trägerbaugruppe 10 erstrecken sich die Stifte 40 nicht geradlinig parallel zur Drehachse D, sondern sind analog zum Verlauf der Maxima der konvexen Abschnitte 26 bzw. der Minima der konkaven Abschnitte 27 gekrümmt und erstrecken sich entlang eines Abschnitts der Helixbahn (Figur 17).

Die Erfindung betrifft eine Trägerbaugruppe 10 sowie ein Verfahren zu deren Zusammenbau. Die Trägerbaugruppe 10 ist dazu eingerichtet, wenigstens ein Bauteil 11 zu tragen, das mittels der Trägerbaugruppe 10 drehbar um eine Drehachse D angeordnet ist. Das Bauteil 11 kann, z.B. eine Schneidplatte 12 eines Werkzeugs sein, so dass die Trägerbaugruppe 10 eine Werkzeugträgerbaugruppe 13 darstellt. Die Trägerbaugruppe 10 ist in Leichtbauweise aufgebaut und weist mehrere in einer Axialrichtung A nebeneinander angeordnete Innenhohlkörper 16 auf, die von wenigstens einem Außenhohlkörper 25 in Umfangsrichtung U umschlossen werden. Die Innenhohlkörper 16 sind beispielsweise polygonähnlich mit geradlinigen oder alternativ mit konkav gekrümmten Stegabschnitten 17 und mit konvex gekrümmten Stützabschnitten 18 ausgebildet. Sie stützen sich mit ihren Stützabschnitten radial innen am Außenhohlkörper 25 ab. Am Außenhohlkörper 25 ist wenigstens eine Aufnahme 28 zum Anbringen des wenigstens einen Bauteils 11 vorhanden.

### Bezugszeichenliste:

- 10: Trägerbaugruppe
- 11: Bauteil
- 12: Schneidplatte
- 13: Werkzeugträgerbaugruppe

- 16: Innenhohlkörper
- 17: Stegabschnitt
- 18: Stützabschnitt

- 21: erste Gruppe
- 22: zweite Gruppe

- 25: Außenhohlkörper
- 26: konvexer Abschnitt
- 27: konkaver Abschnitt
- 28: Aufnahme
- 29: Bauteiltragkörper
- 30: Durchbrechung
- 31: Befestigungsabschnitt

- 34: Haltekörper
- 35: Spannkörper
- 36: Flansch
- 37: Anbringungsseite
- 38: Nut
- 39: Einstecköffnung
- 40: Stift
- 41: Befestigungsloch
- 42: Innenfreiraum
- 43: Verstärkungsfasern des Außenhohlkörpers
- 44: Verstärkungsfasern des Außenhohlkörpers

- α: Drehwinkel
- β: Versatz
- A: Axialrichtung
- D: Drehachse
- F: Fliehkraft
- M_{U}: Drehmoment in Umfangsrichtung
- M_{B}: Biegemoment um Biegeachse rechtwinkelig zur Drehachse
- U: Umfangsrichtung

## Patentansprüche

1. Trägerbaugruppe (10), insbesondere Werkzeugträgerbaugruppe (13), die zum Anordnen wenigstens eines Bauteils (11) und zum drehenden Antreiben um eine Drehachse (D) eingerichtet ist,
mit mehreren Innenhohlkörpern (16), die in einer Axialrichtung (A) parallel zur Drehachse (S) nebeneinander angeordnet sind und die Drehachse (D) jeweils umschließen, und die mehrere Stegabschnitte (17) aufweisen, wobei jeweils zwei unmittelbar benachbarte Stegabschnitte (17) unter Bildung eines gekrümmten Stützabschnitts (18) miteinander verbunden sind,
mit wenigstens einem Außenhohlkörper (25), der die Drehachse (D) umschließt und radial außen an wenigstens einem der Innenhohlkörper (16) anliegt, wobei der wenigstens eine Außenhohlkörper (25) wenigstens eine Aufnahme (28) aufweist, die zum Anbringen des wenigstens einen Bauteils (11) eingerichtet ist.

2. Trägerbaugruppe nach Anspruch 1,
**dadurch gekennzeichnet, dass** jeder der Innenhohlkörper (16) und/oder der wenigstens eine Außenhohlkörper (25) integral ausgebildet ist.

3. Trägerbaugruppe nach Anspruch 1 oder 2,
**dadurch gekennzeichnet, dass** jeder der Innenhohlkörper (16) aus einem faserverstärkten Verbundmaterial besteht.

4. Trägerbaugruppe nach einem der vorhergehenden Ansprüche,
**dadurch gekennzeichnet, dass** der wenigstens eine Außenhohlkörper (25) aus Leichtmetall oder einem faserverstärkten Verbundmaterial besteht.

5. Trägerbaugruppe Nach Anspruch 4,
**dadurch gekennzeichnet, dass** das faserverstärkten Verbundmaterial Verstärkungsfasern (43, 44) aufweist, die gekreuzt angeordnet sind.

6. Trägerbaugruppe nach einem der vorhergehenden Ansprüche,
**dadurch gekennzeichnet, dass** alle Innenhohlkörper (16) dieselbe Anzahl an Stegabschnitten (17) und gekrümmten Stützabschnitten (18) aufweisen.

7. Trägerbaugruppe nach einem der vorhergehenden Ansprüche,
**dadurch gekennzeichnet, dass** wenigstens eine erste Gruppe (21) und eine zweite Gruppe (22) von Innenhohlkörpern (16) gebildet ist, wobei der wenigstens eine Innenhohlkörper (16) der ersten Gruppe (21) gegenüber dem wenigstens einen Innenhohlkörper (16) der zweiten Gruppe (22) in einer Umfangsrichtung (U) um einen Drehwinkel (α) versetzt ist.

8. Trägerbaugruppe nach Anspruch 7,
**dadurch gekennzeichnet, dass** alle Innenhohlkörper (16) der ersten Gruppe (21) dieselbe Drehausrichtung um die Drehachse (D) aufweisen.

9. Trägerbaugruppe nach Anspruch 7 oder 8,
**dadurch gekennzeichnet, dass** alle Innenhohlkörper (16) der zweiten Gruppe (22) dieselbe Drehausrichtung um die Drehachse (D) aufweisen.

10. Trägerbaugruppe nach Anspruch 7,
**dadurch gekennzeichnet, dass** alle Innenhohlkörper (16) der ersten Gruppe (21) und/oder der zweiten Gruppe (22) um einen Versatz in Umfangsrichtung relativ zueinander gedreht sind, wobei der Versatz vorzugsweise kleiner ist als der Drehwinkel (α).

11. Trägerbaugruppe nach einem der vorhergehenden Ansprüche,
**dadurch gekennzeichnet, dass** der wenigstens eine Außenhohlkörper (25) mehrere Aufnahmen (28) aufweist, die in einer Umfangsrichtung (U) um die Drehachse (D) mit Abstand angeordnet sind.

12. Trägerbaugruppe nach einem der vorhergehenden Ansprüche,
**dadurch gekennzeichnet, dass** in Axialrichtung (A) parallel zur Drehachse (D) neben den Innenhohlkörpern (16) und dem wenigstens einen Außenhohlkörper (25) ein Haltekörper (34) angeordnet ist, an dem die Innenhohlkörper (16) und der wenigstens einen Außenhohlkörper (25) befestigt sind.

13. Trägerbaugruppe nach Anspruch 12,
**dadurch gekennzeichnet, dass** mehrere sich parallel zur Drehachse (D) erstreckenden Stifte (40) vorhanden sind, die mit dem Haltekörper (34) verbunden sind.

14. Trägerbaugruppe nach Anspruch 13,
**dadurch gekennzeichnet, dass** jeder Innenhohlkörper (16) radial innen an jedem der gekrümmten Stützabschnitte (18) an einem Stift (40) anliegt.

15. Trägerbaugruppe nach einem der vorhergehenden Ansprüche,
**dadurch gekennzeichnet, dass** wenigstens ein Bauteiltragkörper (29) vorhanden ist, der an der wenigstens einen Aufnahme (28) angeordnet ist, wobei der Bauteiltragkörper (29) zum Anbringen des wenigstens einen Bauteil (11) eingerichtet ist.

16. Trägerbaugruppe nach Anspruch 13 oder 14 und nach Anspruch 14,
**dadurch gekennzeichnet, dass** der wenigstens eine Bauteiltragkörper (29) mit einem Befestigungsabschnitt (31) durch eine Durchbrechung (30) der Aufnahme (28) durch den Außenhohlkörper (25) nach radial innen hindurchragt und mit dem Befestigungsabschnitt (31) an einem der Stifte (40) befestigt ist.

17. Verfahren zum Zusammenbau einer Trägerbaugruppe (10), umfassend die folgenden Schritte:
- Anordnen wenigstens eines Außenhohlkörpers (25) um eine Drehachse (D), wobei der wenigstens eine Außenhohlkörper (25) wenigstens eine Aufnahme (28) aufweist, die zum Anbringen wenigstens einen Bauteils (11) eingerichtet ist.
- Anordnen mehrerer Innenhohlkörpern (16) in einer Axialrichtung (A) parallel zur Drehachse (D) nebeneinander und jeweils um die Drehachse (D), so dass sich die Innenhohlkörper (16) radial innen am wenigstens einen Außenhohlkörper (25) abstützten, wobei jeder der Innenhohlkörper (16) mehrere Stegabschnitte (17) aufweist, wobei jeweils zwei unmittelbar benachbarte Stegabschnitte (17) unter Bildung eines gekrümmten Stützabschnitts (18) miteinander verbunden sind, und
- Anbringen des wenigstens einen Bauteils (11) an der wenigstens einen Aufnahme (28).
